(19) Europäisches Patentamt
European Patent Office
Office européen des brevets

(11) EP 4 678 271 A1

(12) EUROPEAN PATENT APPLICATION

(43) Date of publication:
**14.01.2026 Bulletin 2026/03**

(21) Application number: **24187355.3**

(22) Date of filing: **09.07.2024**

(51) International Patent Classification (IPC):
***B01D 53/14*** *(2006.01)*

(52) Cooperative Patent Classification (CPC):
**B01D 53/1475; B01D 53/1425;** B01D 2252/204; B01D 2258/0283

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **L'AIR LIQUIDE, SOCIETE ANONYME POUR L'ETUDE ET L'EXPLOITATION DES PROCEDES GEORGES CLAUDE**
**75007 Paris (FR)**

(72) Inventors:
- **Schmid McGuinness, Teja**
  **60439 Frankfurt (DE)**
- **Meyer, Quentin**
  **60388 Frankfurt (DE)**
- **Gargiulo, Andrea**
  **60439 Frankfurt (DE)**
- **Keuchel, Florian**
  **60439 Frankfurt (DE)**
- **Chaubet, Lucie**
  **60388 Frankfurt (DE)**

(74) Representative: **Air Liquide**
**L'Air Liquide S.A.**
**Direction de la Propriété Intellectuelle**
**75, Quai d'Orsay**
**75321 Paris Cedex 07 (FR)**

# (54) PROCESS FOR REMOVING CARBON DIOXIDE FROM FLUE GAS

(57) The invention relates to a process for separating carbon dioxide from a flue gas stream by gas scrubbing with a liquid scrubbing agent containing at least one absorbent compound which is selective for carbon dioxide absorption. According to the invention, a portion of a carbon dioxide enriched scrubbing agent stream discharged from an absorption column is introduced into a partial regeneration column, in which the pressure is reduced by means of a pressure reducing device in fluid connection with the partial regeneration column, to generate a partially regenerated scrubbing agent stream which is returned to the absorption column. A further portion of the carbon dioxide enriched scrubbing agent stream is introduced into a hot regeneration column to form a fully regenerated scrubbing agent stream, which is also returned to the absorption column.

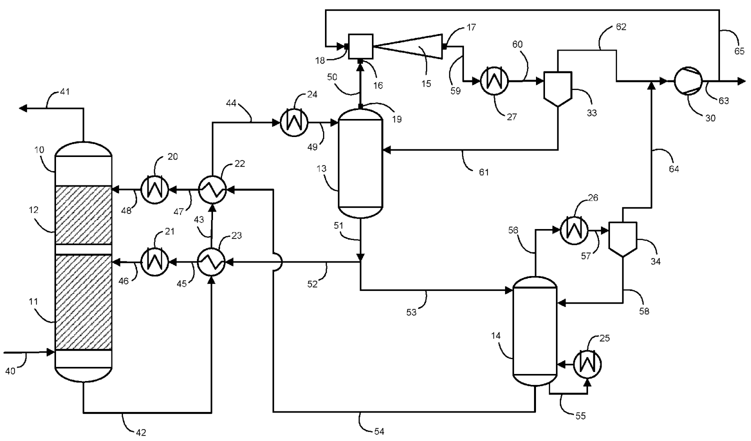


Fig. 1

EP 4 678 271 A1

## Description

The invention relates to a process for separating carbon dioxide from a flue gas stream.

The reduction of carbon dioxide ($CO_2$) emissions in various chemical and industrial processes is crucial to mitigate the risks and effects of climate change. It follows that high carbon capture rates are targeted on these processes, typically in excess of 90%.

In chemical and industrial processes that involve a combustion step, while a certain carbon capture rate can sometimes be achieved on a process gas in favourable conditions (high $CO_2$ concentration or partial pressure, high pressure, limited impurities), a certain portion of the $CO_2$ emissions are always emitted at lower concentrations and pressures in the flue gas that results from the combustion reaction. $CO_2$ capture on the flue gas is consequently often required in order to reach a high capture rate of 90 % or more, whether on its own or in combination with carbon capture on a process or pre-combustion gas.

The reference process for capturing $CO_2$ at low concentrations (< 25 %) from low pressure gasses is a chemical absorption technology, typically an amine wash unit with a solvent (scrubbing agent) adapted for the conditions and impurities of the flue gas.

While a capture rate of up to 95 % can typically be achieved with a chemical wash technology on such a flue gas, the unfavourable conditions lead to a higher energy consumption for the carbon capture unit, which in turn results in higher indirect emissions. To compound the situation further, in many cases there is insufficient heat available in the wider process.

The desorption or regeneration step in an amine wash unit is more critical in regards to energy consumption, however. In a typical amine wash process, heat must be supplied to desorb $CO_2$ to a sufficient extent, in order to maximize the cyclic loading capacity of the solvent and therefore maximize the efficiency of the process and minimize the cost of the overall process.

High temperatures, e.g. 120 to 130 °C, are usually required for the desorption of $CO_2$ from an amine type solvent (absorbent), with a maximum threshold imposed by thermal degradation of the amine solvent. At these temperatures, and at the pressure conditions typical for amine regeneration columns, the water in the aqueous amine solution starts to evaporate. This water vapour generated in the regeneration column acts as a stripping medium and further enhances the desorption of $CO_2$.

The necessity of reaching these high temperatures nevertheless requires the use of high grade heat sources such as low pressure or medium pressure steam, which are often not available in sufficient quantities in industrial facilities. Furthermore, the evaporation of the water in the aqueous solvent mixture accounts for the major part of the energy consumption in the process.

Thus, $CO_2$ desorption at temperatures beneath 100 °C would be preferable. The amount of $CO_2$ that can be desorbed beneath 100 °C is constrained, however, by thermodynamic limitations, and possible kinetic limitations.

EP 4 282 511 A1 discloses a scheme in which part of the $CO_2$ laden amine solvent is partially regenerated below 100 °C to generate a semi-lean amine, and a major part of this semi-lean amine is returned to the absorption column. The residual part of the semi-lean amine is routed to a hot regeneration column to form a lean solvent, with a $CO_2$ loading that is low enough for the targeted capture rate. This lean solvent is also returned to the absorber. By implementing this scheme, high grade heat required in the system can be reduced by half.

Several methods are proposed for the partial regeneration step, which focus on facilitating the breakdown of the carbamate ions formed by reaction of the amine and $CO_2$. Those methods include the usage of Lewis or Bronsted acid catalyst components and bubble formation promoters.

Those methods do not address the limitations of mass transfer across the gas-liquid interface. Furthermore, the use of catalysts with acidic centers or bubble formation promoters introduces substances into the process that can lead to undesirable contamination or corrosion. This applies in particular to Lewis catalysts, which comprise or consist of a metal oxide, in particular a heavy metal oxide.

The post-published European patent application No. 24165203 proposes the use of a non-polar stripping agent in the partial regeneration stage, to reduce the partial pressure of $CO_2$, thereby contributing to overcome the mass transfer limitation to the gas phase, and facilitating the desorption of $CO_2$ beneath 100 °C. The non-polar stripping agent is selected for the following three characteristics.

First, a low solubility in water respectively the solvent-water-mixture to avoid accumulation in the solvent and contamination of the treated flue gas stream. Second, a low reactivity with the solvent and with carbon dioxide. Third, a boiling point at atmospheric pressure preferably in the range of 40 °C to 80 °C, so that it can easily be separated from carbon dioxide by cooling or compression.

In particular Pentane, Hexane and Cyclohexane are identified as stripping agents that exhibit all these characteristics. Various example cases were developed in which the solvent is partially regenerated through stripping with hexane, following which a semi-lean solvent loop is implemented to reduce the high-grade heat demand of the overall setup by approximately 50 %.

The above mentioned prior art references propose possibilities to improve the energy efficiency of an overall setup to remove carbon dioxide, means of implementation of a semi-lean solvent loop with a solvent which is partially regenerated preferably beneath a threshold temperature of 100 °C, thereby avoiding high losses of energy in the vaporization of water. The prior art references describe various methods to achieve this partial regeneration, ranging from the use of acidic materials to the use of a non-polar (organic) stripping agent.

EP 4 282 511 A1 proposes an amine wash with a partial regenerations step and a semi-lean loop, leading to a reduction of the high grade heat consumption by 50 %. However, depending on certain boundary parameters of the process, this solution may require acidic materials to enhance the breakdown of the ions formed between the carbon dioxide and the amine (e.g. the carbamate ion), with the possible disadvantages described in more detail above. The desorption of carbon dioxide beneath 100 °C is also constrained by the transfer from the liquid to the gas phase, for which EP 4 282 511 A1 does not propose a solution. The use of a non-polar stripping agent, such as hexane, may overcome the limitations of mass transfer at the gas-liquid-interface.

However, in spite of the low solubility of hexane or comparable chemical species in the solvent-water-mixture, a certain amount of the non-polar stripping agent may accumulate in the solvent, raising the prospect of foaming problems, or possible safety concerns in the presence of high Oxygen content in the flue gas stream to be treated.

Accordingly, there is a need for improved processes for removing carbon dioxide from flue gas, and regenerating the used solvent or scrubbing agent with a low energy consumption.

The terms "semi-lean solvent" and "partially regenerated scrubbing agent" have the same technical meaning. The same applies for the terms "rich solvent" and "enriched scrubbing agent", and respectively the terms "lean solvent" and "regenerated scrubbing agent".

A contribution to the at least partial solution of at least one of the above mentioned objects is provided by the subject-matter of the independent claims. The dependent claims provide preferred embodiments which contribute to the at least partial solution of at least one of the objects. Preferred embodiments of elements of a category according to the invention shall, if applicable, also be preferred for components of same or corresponding elements of a respective other category according to the invention. The terms "having", "comprising" or "containing" etc. do not exclude the possibility that further elements, ingredients etc. may be comprised. The indefinite article "a" or "an" does not exclude that a plurality may be present.

According to one aspect of the invention, at least one of the underlying problems is at least partially solved by a process for separating carbon dioxide from a flue gas stream by gas scrubbing with a liquid scrubbing agent containing at least one absorbent compound which is selective for carbon dioxide absorption, wherein the process comprises the following process steps:

(a) Providing the flue gas stream and introducing the flue gas stream into an absorption column;

(b) Contacting the flue gas stream in the absorption column with a first scrubbing agent stream and a second scrubbing agent stream in countercurrent flow, whereby a carbon dioxide enriched scrubbing agent stream is formed, and wherein a carbon dioxide depleted flue gas stream is formed, which is discharged from the absorption column;

(c) Introducing the carbon dioxide enriched scrubbing agent stream into a partial regeneration column to generate a partially regenerated scrubbing agent stream and a first carbon dioxide containing regeneration stream, wherein the partial regeneration column comprises a discharge port for discharging the first carbon dioxide containing regeneration stream from the partial regeneration column, and wherein said discharge port is in fluid connection with a pressure reducing device to reduce the pressure within the partial regeneration column;

(d) Dividing the partially regenerated scrubbing agent stream into a first substream and into a second substream, wherein the first substream forms the first scrubbing agent stream;

(e) Introducing the first scrubbing agent stream into the absorption column for contacting the flue gas stream according to step (b);

(f) Introducing the second substream into a hot regeneration column, wherein the second substream is further regenerated to generate a regenerated scrubbing agent stream, which forms the second scrubbing agent stream, and to generate a second carbon dioxide containing regeneration stream;

(g) Introducing the second scrubbing agent stream into the absorption column for contacting the flue gas stream according to step (b).

According to the process of the invention, the partial regeneration of the scrubbing agent occurs at a reduced

pressure. Thereby, the partial regeneration column comprises a discharge port for discharging a first carbon dioxide containing regeneration stream from the partial regeneration column, and said discharge port is in fluid connection with a pressure reducing device to reduce the pressure within the partial regeneration column. Hence, the pressure reducing device is configured to reduce the pressure within the partial regeneration column. The pressure reducing device is in fluid connection with the discharge port of the partial regeneration column, for example by means of a conduit. Thereby, the first carbon dioxide containing regeneration stream will be entrained by the pressure reducing device, which reduces the pressure within the partial regeneration column at the same time.

According to one embodiment of the process, the pressure reducing device is configured such that the pressure in the partial regeneration column is below atmospheric pressure, in particular below a pressure of 1 bara.

The pressure unit "bara" refers to absolute pressure, that is a pressure mode where the reference pressure is absolute zero.

According to the invention, the limitations to the mass transfer from the liquid to the gas phase are overcome by reducing the pressure in the partial regeneration column, in particular by reducing the carbon dioxide partial pressure in a top region of the partial regeneration column.

According to one embodiment of the process, the partial regeneration column is operated at a temperature below 100 °C. Thus, vaporization of water from the scrubbing agent of the partial regeneration column is limited.

Preferably, the partial regeneration column is operated under pressure and temperature conditions which minimize the evaporation of water from the scrubbing agent, in particular when the scrubbing agent is an aqueous amine solution.

By reducing the pressure within the partial regeneration column, desorption of carbon dioxide from the scrubbing agent is facilitated at lower temperatures.

At reduced pressure, no intrinsically generated water vapour is required as a stripping medium for the desorption of carbon dioxide within the partial regeneration column, which means that the partial regeneration column does not have to be equipped with a reboiler. Instead, it is sufficient to preheat the carbon dioxide enriched scrubbing agent stream upstream the partial regeneration column to a suitable temperature.

This opens up the advantageous possibility of using so-called "low grade heat" as a heat source for preheating the absorption medium loaded with carbon dioxide. "Low grade heat" sources are waste heat sources whose heat is generally not usable due to a too low temperature level. Such heat is therefore usually lost in the process.

The first carbon dioxide containing regeneration stream discharged from the partial regeneration column via the discharge port of said column in particular contains carbon dioxide, water and traces of the absorbent component of the utilized scrubbing agent.

After capturing carbon dioxide from the flue gas stream, the carbon dioxide enriched scrubbing agent stream is sent to a partial regeneration step in a partial regeneration column, in which the carbon dioxide enriched scrubbing agent is not fully regenerated. Thus, a semi-lean solvent stream or partially regenerated scrubbing agent stream is obtained. Said stream of partially regenerated scrubbing agent is divided into two substreams. The first substream is returned to the absorption column, thus forming a semi-lean absorption loop with the partial regeneration column. The second substream is further regenerated in a hot regeneration column to generate a regenerated scrubbing agent stream.

The scrubbing agent may but does not have to be fully regenerated in the hot regeneration column. It will be understood by those skilled in the art that the desorption of carbon dioxide from the scrubbing agent may often not be complete in the sense of a 100 % regeneration under given operational conditions. The regenerated scrubbing agent stream is also returned to the absorption column. In the hot regeneration column, a reboiler may be arranged in its bottom region, which is configured to at least partially vaporize the second substream, in particular to vaporize water of the second substream to generate steam, to enhance desorption of carbon dioxide from the scrubbing agent, in particular to enhance desorption of carbon dioxide from the absorbent component of the scrubbing agent.

One further aspect of the process is characterized in that the pressure reducing device is a vacuum pump, and wherein a suction port of the vacuum pump is in fluid connection with the discharge port of the partial regeneration column.

According to this embodiment, the pressure is reduced within the partial regeneration column by means of a vacuum pump. The suction port of the vacuum pump is in fluid connection with the discharge port of the partial regeneration column, for example by means of a conduit.

One further aspect of the process is characterized in that the pressure reducing device is an ejector, in particular a vacuum ejector, comprising a motive fluid port, an inlet gas port and an outlet gas port, wherein the inlet gas port is in fluid connection with the discharge port of the partial regeneration column, the motive fluid port is in fluid connection with a motive fluid source which provides a gaseous motive fluid stream at elevated pressure, and wherein a mixture of the first carbon dioxide containing regeneration stream and of the gaseous motive fluid stream is discharged from the ejector via its outlet gas port, thereby forming a carbon dioxide containing ejector outlet stream.

Ejector systems, also referred to as jet pumps, are known to those skilled in the art. An ejector always comprises a motive fluid port for introducing a motive fluid, an inlet gas port for introducing an inlet gas, and an outlet gas port for discharging an outlet gas from the ejector. The outlet gas is a mixture of the motive fluid and of the inlet gas. According to

this embodiment, the motive fluid is a gaseous motive fluid stream at elevated pressure from a motive fluid source. Via the inlet gas port, the first carbon dioxide containing regeneration stream is introduced into the ejector and is mixed with the motive fluid within the diffuser of the ejector. The resulting mixed stream, here referred to as carbon dioxide containing ejector outlet stream, is discharged or "ejected" from the ejector via its outlet port.

According to one example, the pressure of the motive fluid at the motive fluid port of the ejector is p1. Further, the pressure of the outlet gas (carbon dioxide containing ejector outlet stream) at the outlet gas port of the ejector is p2. Further, the pressure of the inlet gas (first carbon dioxide containing regeneration stream) at the inlet gas port of the ejector is p3. The following applies according to the pressure conditions in the ejector: p1 is greater than p2 is greater than p3 ($p1>p2>p3$).

The aforementioned embodiment has the following advantages. Firstly, ejectors have no rotating parts and are therefore low-maintenance. Secondly, the ejector itself does not consume any additional energy. Energy for operating the ejector is ultimately provided by the gaseous motive fluid supplied at elevated pressure. The motive fluid is a gaseous stream. Since several gaseous streams are produced in the process according to the invention, each of these streams can in principle be used as a motive fluid after appropriate compression to a sufficient pressure. However, although less preferred, it is also possible to provide a gas stream external to the process as a gaseous motive fluid stream.

According to one embodiment of the process, a condensable gas is used as the motive fluid stream for the ejector. Whilst the temperature of the motive fluid within the ejector is reduced, the condensable gas will condense at least in part, which significantly reduces the volume of the motive fluid. Thus, a particular low pressure can be generated at the inlet gas port of the ejector. One example for a suitable motive fluid in this case is water respectively steam.

According to one further embodiment of the process, a multi-stage ejector setup is used. As the compression ratio of a single-stage ejector is limited, several ejectors may be connected in series for lower suction pressures and hence lower pressures in the partial regeneration column. A condenser may be arranged between two ejectors to condense the motive fluid used in the process. This reduces the volume of the gas mixture and the energy requirement of the respective next ejector stage.

One further aspect of the process is characterized in that the motive fluid stream is a compressed carbon dioxide containing stream, which is at least partially formed of the first carbon dioxide containing regeneration stream, the second carbon dioxide containing regeneration stream, or a combination of the two aforementioned streams.

According to this embodiment, a process-internal gas stream is used to generate the gaseous motive fluid stream after suitable compression. According to one example, a compressor is arranged downstream of the hot regeneration column. In said compressor, the second carbon dioxide regeneration stream is compressed and used for generating the gaseous motive fluid stream. According to one further example, a compressor is arranged downstream of the partial regeneration column, more precisely downstream of the ejector, and in fluid connection with the outlet port of the ejector. In said compressor, the carbon dioxide containing ejector outlet stream is compressed and used for generating the gaseous motive fluid stream. According to one further example, the second carbon dioxide regeneration stream and the carbon dioxide containing ejector outlet stream are combined and the resulting mixed stream is compressed and used for generating the gaseous motive fluid stream.

Hence, one further aspect of the process is characterized in that the motive fluid port of the ejector is in fluid connection with an outlet port of a compressor, and wherein in the compressor, either at least a portion of the carbon dioxide containing ejector outlet stream, at least a portion of the second carbon dioxide containing regeneration stream, or a combination of the aforementioned streams is compressed and provided as the gaseous motive fluid stream at elevated pressure.

According to one embodiment, a multi-stage compression system might be utilized in the process. Such a system may comprise a plurality of compressors arranged and connected in series. In that case, the motive fluid port of the ejector is in fluid connection with the outlet port of the compressor which provides the gaseous motive fluid stream with the appropriate (elevated) pressure to operate the ejector.

A gas-liquid separation device may be arranged upstream of a compressor or between compressors in case a multi-stage compressor system is utilized. In a gas-liquid separation device, mainly water and optionally traces of the absorbent compound of the scrubbing agent is separated by cooling and condensation. A gas-liquid separation device may comprise a cooler and a separation vessel arranged downstream of the cooler. From the separation vessel, condensed water and/or absorbent may be recycled to the partial regeneration column and/or the hot regeneration column.

One further aspect of the process is characterized in that the gaseous motive fluid stream has a pressure of more than 5 bara, or more than 10 bara, or more than 20 bara, or more than 30 bara, or from 10 to 55 bara, preferably from 20 to 45 bara, more preferred form 30 to 35 bara.

One further aspect of the process is characterized in that a compression ratio applied for the ejector, defined as the ratio of the outlet pressure at the outlet gas port of the ejector to the suction pressure at the inlet gas port of the ejector is from 1.1 to 10.0, preferably is from 1.2 to 5.0.

One further aspect of the process is characterized in that an entrainment ratio applied for the ejector, defined as

the ratio of the mass flow of the first carbon dioxide containing regeneration stream introduced into the ejector via its inlet gas port to the mass flow of the gaseous motive fluid stream introduced into the ejector via its motive fluid port is from 1 to 20, preferably is from 2 to 10.

One further aspect of the process is characterized in that the pressure within the partial regeneration column is below atmospheric pressure, preferably the pressure within the partial regeneration column is from 0.75 bara to 0.95 bara, more preferred is from 0.80 bara to 0.85 bara, more preferred is from 0.82 to 0.83 bara.

One further aspect of the process is characterized in that in the partial regeneration column, the partially regenerated scrubbing agent stream and the first carbon dioxide containing regeneration stream are generated at a temperature equal to or below 100 °C.

Preferably, the partially regenerated scrubbing agent stream and the first carbon dioxide containing regeneration stream are generated at a temperature of 85 °C to 99 °C, preferably a temperature of 88 °C to 97 °C, more preferred a temperature of 90 °C to 95 °C. In other words, the partial regeneration column is preferably operated at a temperature of 85 °C to 99 °C, preferably a temperature of 88 °C to 97 °C, more preferred a temperature of 90 °C to 95 °C.

Preferably, pressure and temperature conditions are selected such that evaporation of water from the scrubbing agent within the partial regeneration column, in particular from the aqueous amine solution utilized as the scrubbing agent, is minimized.

One further aspect of the process is characterized in that the partially regenerated scrubbing agent stream is generated in such a way that the ratio of the carbon dioxide loading of the partially regenerated scrubbing agent stream to the carbon dioxide loading of the carbon dioxide enriched scrubbing agent stream is 0.9 or less, preferably is from 0.6 to 0.9.

The carbon dioxide enriched scrubbing agent stream is preferably partially regenerated in the partial regeneration column at a temperature equal to or below 100 °C. This is preferably done in such a way that the ratio between the carbon dioxide loading of the partially regenerated scrubbing agent stream and the carbon dioxide loading of the carbon dioxide enriched scrubbing agent stream is from 0.6 to 0.9. This carbon dioxide loading ratio is also referred to as the $\lambda$ value. A $\lambda$ value of 0.9 or less is required for a particular efficient implementation of the semi-lean solvent loop, i.e. the loop comprising the recycling of the partially regenerated scrubbing agent stream to the absorption column. Above a $\lambda$ value of 0.9, high flow rates in the semi-lean solvent loop may be required in the absorption column, detracting from energy efficiency of the setup.

Correspondingly, the regenerated scrubbing agent stream is generated in such a way that the ratio of the carbon dioxide loading of the regenerated scrubbing agent stream to the carbon dioxide loading of the carbon dioxide enriched scrubbing agent stream is preferably less than 0.6, in particular less than 0.3, more preferred less than 0.1.

One further aspect of the process is characterized in that in the partial regeneration column, the carbon dioxide enriched scrubbing agent stream is contacted by means of a gaseous nonpolar stripping agent in countercurrent flow, to enhance regeneration of the carbon dioxide enriched scrubbing agent stream to the partially regenerated scrubbing agent stream.

As an additional measure and to enhance or facilitate the partial regeneration of the scrubbing agent preferably at temperatures at or below 100 °C, the carbon dioxide enriched scrubbing agent stream is additionally contacted by means of a gaseous non-polar stripping agent in countercurrent flow.

According to an example, the nonpolar stripping agent has an electric dipole moment which is at least 0.5 Debye less than the electric dipole moment of the absorbent compound of the scrubbing agent.

That is, the nonpolar stripping agent exhibits a lower polarity than the absorbent compound of the scrubbing agent. The larger the difference in polarity is between the nonpolar stripping agent and the absorbent compound of the scrubbing agent, the lower the miscibility of the nonpolar scrubbing agent and the absorbent compound.

According to an example, the nonpolar stripping agent has an electric dipole moment which is at least 0.5 Debye less than the electric dipole moment of the scrubbing agent. The scrubbing agent comprises the absorbent compound and may comprise at least one further compound, in particular water. The scrubbing agent may comprise more than one absorbent compound. According to one example, the scrubbing agent comprises the absorbent compound and water, which means the scrubbing agent is an aqueous solution of the absorbent compound and water. The larger the difference in polarity is between the nonpolar stripping agent and the scrubbing agent, the lower the miscibility of the nonpolar scrubbing agent and the scrubbing agent.

One further aspect of the process is characterized in that the electric dipole moment of the nonpolar stripping agent is 0.50 Debye or less, preferably is 0.25 Debye or less, more preferred is 0.10 Debye or less.

According to an example, the electric dipole moment of the nonpolar stripping agent is 0 (zero), which means the nonpolar scrubbing agent exhibits no polarity at all. Example for such scrubbing agents are He (Helium), molecular Nitrogen and molecular Hydrogen.

According to one further example, the nonpolar stripping agent comprises a condensable compound or comprises a mixture of compounds comprising at least one condensable compound. In particular, the nonpolar stripping agent comprises a condensable compound which is condensable at or below 100 °C, or comprises a mixture of

compounds comprising at least one condensable compound which is condensable at or below 100 °C. Preferably, the nonpolar stripping agent has a boiling point that is well above the temperature at which the partial regeneration column is operated, to ensure that the nonpolar stripping agent is in a gaseous state when it is introduced into the column.

According to one example, the nonpolar stripping agent comprises at least one component from the group comprising Nitrogen, Helium and Hydrogen.

According to one further example, the nonpolar stripping agent comprises an aliphatic, an alicyclic or an aromatic hydrocarbon, preferably a $C_5$ or $C_6$ aliphatic, alicyclic or aromatic hydrocarbon.

Aliphatic, alicyclic and aromatic hydrocarbons have a particularly low electric dipole moment, since no polar functional groups such as Hydroxyl-, Amino- or Carboxyl groups are present.

One further aspect of the process is characterized in that the nonpolar stripping agent comprises at least one component from the group comprising Pentane, Hexane, Cyclopentane, and Cyclohexane.

Further preferred, the nonpolar stripping agent comprises hexane, further preferred the nonpolar stripping agent consists of hexane.

The mentioned compounds have boiling temperatures which allow them to be easily converted into a gaseous state under the operation conditions of the partial regeneration column. At the same time, these compounds have a low enthalpy of vaporization, which reduces energy consumption of the process.

One further aspect of the process is characterized in that in the partial regeneration column the carbon dioxide enriched scrubbing agent stream is additionally contacted with a solid acidic regeneration catalyst having Lewis or Bronsted acidic centers, to enhance regeneration of the carbon dioxide enriched scrubbing agent stream to the partially regenerated scrubbing agent stream.

Decreasing the pressure in the partial regeneration column and/or utilizing a non-polar stripping agent has an impact on the mass transfer limitations of the desorption process, because the partial pressure of $CO_2$ in the gas phase is decreased. On the other side, the acidic solid catalyst impacts the kinetics of the chemical reaction between carbon dioxide and the absorbent, but does not change the limitations related to the partial pressure of $CO_2$ in the gas phase. The combination of both will have a synergetic effect because, each measure solves what is limiting the other one.

Preferably, the solid acidic regeneration catalyst comprises at least one member selected from the following group:

Metal oxides, such as $Al_2O_3$, $TiO_2$, $Cr_2O_3$, $V_2O_5$, WOs, MgO, MoOs, $MnO_2$, $Fe_2O_3$, NiO, CuO, $ZrO_2$, $Nb_2O_5$, $Ag_2CO_3$, $Ag_2O$, $SnO_2$, $ZrO_2$;

metal oxyhydroxides such as $TiO(OH)_2$, AlO(OH), $ZrO(OH)_2$; synthetic and natural zeolites, such as HZSM-5, H-Beta zeolites, silico-alumino-phosphate SAPO-34; mesoporous silica, such as MCM-41 and SBA-15;

sulfated metal oxides, such as $SO_4^{-2}/TiO_2$ , $SO_4^{-2}/ZrO_2$ and $Ce(SO_4)_2/ZrO_2$; sulfated-metal modified catalysts, such as Fe promoted $SO_4^{2-}/ZrO_2$/MCM-41;

hybrid composite and metal modified materials.

One further aspect of the process is characterized in that the scrubbing agent comprises an aqueous solution of at least one amine, wherein the at least one amine is the absorbent compound.

The term scrubbing agent, synonymous with absorption medium or solvent, is in the context of the present invention to be understood as meaning substances or substance mixtures which under process conditions are in the form of a liquid, have an absorption capacity for the components to be separated from the flue gas and may be regenerated by physical methods, for example by flashing, stripping or by hot regeneration.

Chemical washes, like amine washes, which are known per se and frequently used for the absorption of acid gases such as carbon dioxide, are based on chemical absorption (chemisorption). Chemical absorption takes advantage of the chemical reaction between absorbed substance (e.g. acid gas such as $CO_2$) and the solvent active component (e.g. amine) to form a rich liquid, which is regenerated by means of heat to break the chemical bonds formed in the absorption step. Chemical absorption is therefore well suited to achieve high capture rates and purities even at relatively low feed pressures as opposed to physical solvents.

In amine washing, in particular slightly alkaline aqueous solutions of amines are used in an absorption unit (absorption section) usually designed as a washing column. Absorption may take place at low temperature, e.g., 40 °C. Fresh or regenerated absorbent may be fed at the top of the column and the gas stream to be separated may be introduced in the lower section of the scrubbing column. In this process, carbon dioxide is reversibly chemically absorbed. The gas, which is depleted in carbon dioxide, may leave the column at the top and the loaded scrubbing agent may be discharged at the bottom of the column and may further be fed into a desorption or regeneration section, e.g. a column. In this column, the reaction shifts the chemical equilibrium at a higher temperature, thus releasing the absorbed carbon dioxide as a gas. It may then be discharged at the head of the regeneration column for further use or sequestration. The absorbent regenerated in this way may be returned to the absorption section.

The scrubbing agent contains at least one absorbent compound which chemisorptively binds carbon dioxide.

The at least one absorbent compound may be selected from the group comprising:

- Amines, for example

  primary amines, for example monoethanolamine (MEA), aminomethylpropanol (AMP),
  secondary amines, for example ethylenediamine (EDA), piperazine (PZ), butylethanolamine (BEA), diethanolamine (DEA),
  tertiary amines, for example methyldiethanolamine (MDEA), 3-Dimetyl-1-Aminomethypropanol (3DMA1P), triethylendiamine (TEDA), diethylamino-2-butanol (DEAB), 3-(Diethylamino)propylamine (DEAPA);

- an inorganic basic solution, preferably a solution of at least one compound, most preferably an aqueous solutions of at least one compound, selected from the group comprising
  ammonia, sodium hydroxide, potassium hydroxide, potassium carbonate.

The absorbent compound may form the scrubbing solution together with an inorganic solvent such as water or organic solvent such as methanol.

Absorption apparatuses are often arranged in the form of absorption columns. An absorption column, alternatively referred to for example as a gas scrubber or scrubbing column, is a process engineering apparatus in which a gas stream is intensively contacted with a liquid stream to achieve uptake of constituents of the gas stream in the liquid. The configuration thereof aims to generate the largest possible liquid surface area for the best possible mass transfer between the gas and liquid phase. This may be effected by generating bubbles or droplets or by trickling onto solid surfaces. It is therefore usual to provide surface area-enlarging internals such as trays, for example sieve trays or bubble-cap trays, or structured packing; alternatively sections of the absorption column may be filled with random packing such as for example spheres, cylinders, rings or saddles. In terms of construction, absorption columns are usually configured as upright pipes, optionally by combination of pipe sections, which extend along a longitudinal axis running parallel to the vertical and which encompass an interior of the absorption column. Different absorption zones may be comprised in an absorption apparatus and are often but not necessarily separated from one another in terms of construction. The different absorption zones may be fed with different scrubbing agents.

A hot regeneration apparatus, in particular a hot regeneration column, may be understood as meaning a process engineering apparatus which is similar to an absorption column in terms of construction but whose purpose is that of very largely freeing absorbent/scrubbing agent laden with gas components of said components and thus regenerating the scrubbing agent by desorption through introduction of heat. This is technically achieved for example by providing the hot regeneration column with a reboiler for heating the column sump, thus producing scrubbing agent intrinsic vapour which serves as an expulsion, desorption and stripping medium and thus promotes desorption of the gas components.

One further aspect of the process is characterized in that the absorption column comprises a first absorption zone and a second absorption zone, wherein the flue gas stream is first introduced into the first absorption zone, and is contacted in the first absorption zone with the first scrubbing agent stream and the second scrubbing agent stream introduced into the second absorption zone, and wherein the flue gas stream subsequently is introduced into the second absorption zone, and is contacted in the second absorption zone with the second scrubbing agent stream.

According to this embodiment, the first scrubbing agent stream is introduced into the first absorption zone, preferably is introduced at the top of the first absorption zone. Furthermore, the second scrubbing agent stream is introduced into the second absorption zone, preferably is introduced at the top of the second absorption zone.

According to this embodiment, the flue gas stream contacts the first scrubbing agent stream and the second scrubbing agent stream introduced into the second absorption zone in the first absorption zone under first carbon dioxide absorption conditions. A first carbon dioxide depleted flue gas stream is then discharged from the first absorption zone and enters the second absorption zone. Said first carbon dioxide depleted flue gas stream then contacts the second scrubbing agent stream in the second absorption zone under second carbon dioxide absorption conditions. A second carbon dioxide depleted flue gas stream is then discharged from the second absorption zone. This second carbon dioxide depleted flue gas stream forms the carbon dioxide depleted flue gas stream, which is discharged from the absorption column.

The second scrubbing agent stream is discharged from the second absorption zone as a second carbon dioxide enriched scrubbing agent stream. Said stream then enters the first absorption zone, where it is mixed with the first scrubbing agent stream. In the first absorption zone, this mixed stream absorbs further carbon dioxide and thus forms the carbon dioxide enriched scrubbing agent stream, which is discharged from the absorption column.

The first and the second absorption zone may each be provided with surface enlarging internals such as trays, structured packing or random packing.

According to one further aspect of the process, a carbon dioxide loading of the partially regenerated scrubbing agent stream is 0.05 mol to 0.95 mol carbon dioxide per mol of the absorbent compound, in particular 0.05 mol to 0.95 mol carbon dioxide per mol amine, preferably 0.25 mol to 0.40 mol carbon dioxide per mol of the absorbent compound, in

particular 0.25 mol to 0.40 mol carbon dioxide per mol amine.

Correspondingly, a carbon dioxide loading of the regenerated scrubbing agent stream is preferably less than 0.25 mol carbon dioxide per mol of the absorbent compound, in particular less than 0.25 mol carbon dioxide per mol amine, preferably less than 0.05 mol carbon dioxide per mol of the absorbent compound, in particular less than 0.05 mol carbon dioxide per mol amine.

In this context, the term "mol amine" may also be defined as "mol amine group", in particular in case the "amine" contains more than one amine group.

According to one further aspect of the process, the partial regeneration column is operated in such a way so that the first carbon dioxide containing regeneration stream discharged from the partial regeneration column has a temperature of 0 °C to 95 °C.

The partially regenerated scrubbing agent stream is discharged from the partial regeneration column, preferably discharged from a bottom region of the partial regeneration column. The partially regenerated scrubbing agent stream may be discharged from the partial regeneration column via a discharge port, preferably arranged in a bottom region of the partial regeneration column. The partially regenerated scrubbing agent stream is afterwards divided into the first substream and the second substream.

According to one further aspect of the invention, the ratio of the first substream to the sum of the first and second substream is from 0.45 to 0.90.

The ratio of the partially regenerated scrubbing agent stream rerouted to the absorption column (first substream) and the total stream generated in the partial regeneration column (sum of first and second substream) is defined as the split fraction $\xi$. The preferred operating range corresponds to a value of $\xi$ which is 0.45 or higher, up to $\xi = 0.90$.

The second carbon dioxide containing regeneration stream is discharged from the hot regeneration column, preferably discharged from a top region of the hot regeneration column. The second carbon dioxide containing regeneration stream may further contain water (vapour) and residual amounts of the scrubbing agent.

According to one further aspect of the invention, at least a portion of the second carbon dioxide containing regeneration stream is discharged from the hot regeneration column, and is subsequently introduced into the partial regeneration column as stripping agent.

This reduces the energy consumption of the process. The water vapour thereby introduced into the partial regeneration column can easily be condensed and separated from the first carbon dioxide containing regeneration stream in the downstream process.

According to one embodiment of the process, the partial regeneration column is operated such that the carbon dioxide enriched scrubbing agent to be partially regenerated has a temperature which is below the boiling temperature of water.

According to one further embodiment of the process, the hot regeneration column is operated such that the partially regenerated scrubbing agent to be further regenerated has a temperature which is above the boiling temperature of water.

The invention will now be detailed by way of exemplary embodiments and examples with reference to the attached drawings. In the figures and the accompanying description, equivalent elements are each provided with the same reference marks. The drawings are not to scale. Flow diagrams are depicted in a simplified form, i.e. not all elements required for technical realization (e.g. valves and pumps) are shown.

In the drawings

Figure 1 depicts a flow diagram of a first embodiment of the process according to the invention, and

Figure 2 depicts a flow diagram of a second embodiment of the process according to the invention.

In the schematic representation of the process according to the invention as shown in Figure 1, a particular embodiment of the invention is shown in which an ejector, in particular vacuum ejector, is used as the pressure reducing device which is in fluid connection with a partial regeneration column. An aqueous amine solution is used as the liquid scrubbing agent to absorb carbon dioxide from a flue gas stream.

In the process shown in Figure 1, a carbon dioxide containing flue gas stream is fed via line 40 and is introduced into the bottom region of an absorption column 10. The absorption column 10 comprises a first absorption zone 11 and a second absorption zone 12. The first absorption zone 11 is arranged below the second absorption zone 12. A partially regenerated scrubbing agent stream is introduced into the absorption column 10 via conduit 46 at the top of the first absorption zone 11 and at an intermediary height of the absorption column 10. Within the first absorption zone 11, carbon dioxide contained in the flue gas stream is absorbed via chemical absorption (chemisorption) by means of the amine contained in the partially regenerated aqueous amine solution (partially regenerated scrubbing agent). The flue gas stream depleted in carbon dioxide then enters the second absorption zone 12, into which a hot regenerated scrubbing agent stream is introduced via line 48. The hot regenerated scrubbing agent stream, also referred to as the "regenerated

scrubbing agent stream" is introduced into the absorption column 10 at its top region. In the second absorption zone 12, the flue gas is further depleted in carbon dioxide so that as a result, an essentially carbon dioxide free flue gas stream is discharged from the second absorption zone and the absorption column 10 via line 41.

The regenerated scrubbing agent stream introduced into the second absorption zone 12 via line 48 absorbs carbon dioxide from the flue gas stream in said second absorption zone 12 and then enters the first absorption zone 11, where it mixes with the partially regenerated scrubbing agent stream introduced via line 46. The resulting mixed scrubbing agent stream absorbs further carbon dioxide in the first absorption zone, from which a carbon dioxide enriched scrubbing agent stream results. This stream is discharged from the absorption column 10 via line 42.

The carbon dioxide enriched scrubbing agent stream is preheated in heat exchanger 23 against the partially regenerated scrubbing agent stream fed via conduit 52. It is then further fed via conduit 43 into heat exchanger 22, in which it is further heated by means of the hot regenerated scrubbing agent stream fed via conduit 54. The further heated carbon dioxide enriched scrubbing agent stream is then fed via conduit 44 into heat exchanger 24, where it is further heated. The further heated carbon dioxide enriched scrubbing agent stream is further fed via conduit 49 and then introduced into a partial regeneration column 13 at the top region.

The partial regeneration column 13 comprises a discharge port 19 at the top region. Via the discharge port 19, the partial regeneration column is in fluid connection via conduit 50 with an ejector 15. The ejector 15 comprises an inlet gas port 16, an outlet gas port 17, and a motive fluid port 18. Via the ejector 15, the pressure within the partial regeneration column 13 is reduced to facilitate the desorption of carbon dioxide from the carbon dioxide enriched scrubbing agent in the partial regenerations column 13. The partial regeneration column 13 is operated at a temperature which is below 100 °C. In particular, the partial regeneration column 13 is not equipped with a reboiler, which heats the carbon dioxide enriched scrubbing agent to a point that water would vaporize in larger amounts. Instead, the carbon dioxide enriched scrubbing agent stream is only heated to 95 °C by means of the heat exchangers 22, 23 and 24 arranged upstream of the partial regeneration column 13. At the same time a pressure slightly below atmospheric pressure is generated in the partial regeneration column 13. Due to these desorption conditions, only a partially regenerated scrubbing agent stream is generated in the partial regeneration column 13. This partially regenerated scrubbing agent stream is discharged from the partial regeneration column via conduit 51.

The stream discharged via line 51 is divided into a first substream fed via conduit 52, and a second substream fed via conduit 53. The share of the first substream fed via conduit 52 of the total stream of partially regenerated scrubbing agent fed via conduit 51 is 80 %. Correspondingly, the share of the second substream fed via conduit 53 of the total stream fed via conduit 51 is 20 %.

The first substream of partially regenerated scrubbing agent is precooled in heat exchanger 23 against the carbon dioxide enriched scrubbing agent stream discharged from the absorption column 10, further fed via conduit 45, and further cooled in heat exchanger 21. The further cooled partially regenerated scrubbing agent partial stream then enters the first absorption zone 11 of the absorption column 10 as the first scrubbing agent stream according to the invention.

The second substream of the partially regenerated scrubbing agent which is fed via conduit 53 is introduced into a hot regeneration column 14 in its top region. The hot regeneration column 14 comprises a heat exchanger 25 configured as a reboiler, for reboiling a bottom stream of the partially regenerated scrubbing agent. This bottom stream is recirculated through the heat exchanger 25 via conduit 55. By means of reboiling said bottom stream, water vapour is generated in the aqueous solution of the amine scrubbing agent, by which the carbon dioxide desorbs from the absorbent compound. The desorption of carbon dioxide in the hot regeneration column 14 is therefore effected by steam. Hence, a regenerated or hot regenerated scrubbing agent stream is discharged from the bottom region of the hot regeneration column 14 via conduit 54. This regenerated or hot regenerated scrubbing agent stream is further regenerated than the partially regenerated scrubbing agent obtained in the partial regeneration column 13. The regenerated scrubbing agent stream is precooled in heat exchanger 22 against carbon dioxide enriched scrubbing agent fed via line 43. It is then further fed via line 47 into heat exchanger 20, where it is further cooled. The cooled regenerated scrubbing agent forms the second scrubbing agent stream, which is introduced into the second absorption zone 12 of the absorption column 10 via line 48.

From the top region of the partial regeneration column 13, a first carbon dioxide containing regeneration stream is withdrawn. Said first carbon dioxide containing regeneration stream further contains water and minor amounts of the amine, which forms part of the liquid scrubbing agent respectively in this case the aqueous amine solution. The first carbon dioxide containing regeneration stream is entrained into the ejector 15 via the inlet gas port 16. Within the ejector, the first carbon dioxide containing regeneration stream mixes with a motive fluid, which is introduced via the motive fluid port 18 into the ejector 15. The motive fluid stream fed via conduit 65 into the ejector 15 mainly consists of carbon dioxide and has a pressure of at least 30 bar. Thereby the motive fluid stream is able to entrain the first carbon dioxide containing regeneration stream. Hence, within the ejector, the motive fluid stream and the first carbon dioxide containing regeneration stream form a carbon dioxide containing ejector outlet stream, which is transported through the diffuser throat (not shown) and the diffuser (not shown) of the ejector and which is finally discharged from the ejector 15 via its outlet gas port 17. The pressure of the ejector outlet stream fed via conduit 59 is above atmospheric pressure.

The ejector outlet stream is cooled within heat exchanger 27 mainly to condense water and residual amine. The

biphasic mixture thereby obtained is further fed via conduit 60 and then separated into a liquid phase and a gas phase in gas-liquid separator 33. The liquid phase obtained in separator 33 is routed back to the partial regeneration column 13 via conduit 61. The remaining gaseous phase is a water depleted first carbon dioxide containing regenerations stream, which is withdrawn from the separator 33 via conduit 62. In conduit 62, the water depleted gaseous stream mainly consisting of carbon dioxide is combined with a further regeneration stream fed via conduit 64.

From the top of the hot regeneration column 14, a second carbon dioxide containing regeneration stream is withdrawn. Said first carbon dioxide containing regeneration stream further contains water and amine, which forms part of the liquid scrubbing agent respectively in this case the aqueous amine solution. Since in the hot regeneration column 14 the partially regenerated scrubbing agent is heated above the boiling temperature of water, the proportion of water in the second carbon dioxide containing regeneration stream is higher than in the first carbon dioxide regeneration stream. The second carbon dioxide regeneration stream is withdrawn from the hot regenerations column 14 and fed via conduit 56 to heat exchanger 26. In the heat exchanger 26, the second carbon dioxide containing regeneration stream is cooled to condense water and residual amine. The resulting biphasic mixture is further fed via conduit 57 into a gas-liquid separator 34, where it is separated into a liquid phase and a gaseous phase. The liquid phase, mainly consisting of water and minor amounts of amine, is routed back to the hot regeneration column 14 via conduit 58. The gaseous phase forms a water depleted second carbon dioxide containing regeneration stream, which is withdrawn from the gas-liquid separator via conduit 64.

The water depleted first and second carbon dioxide containing regeneration streams are combined in conduit 62 and compressed in compressor 30 to a pressure above 30 bar. A portion of said combined stream is branched off via conduit 65, thereby forming the gaseous motive fluid stream. The remaining combined water depleted carbon dioxide containing regeneration stream is removed from the process and subjected to further use.

In the schematic representation of the process according to the invention as shown in Figure 2, a particular embodiment of the invention is shown in which again an ejector is used as the pressure reducing device. The gas-liquid separation and compression scheme as depicted in Figure 2 is in accordance with the following numerical (simulation) example 1. Only aspects not already discussed in connection with Figure 1 are explained in detail in the following.

The carbon dioxide containing ejector outlet stream fed via a conduit 59 is subjected to a series of cooling, gas-liquid separation and compression steps as shown in Figure 2, where two heat exchangers 27 and 28, two gas-liquid separators 33 and 35, a compressor 30, and conduits 60 and 66 to 68 are involved. A water depleted first carbon dioxide containing regeneration stream is obtained from gas-liquid separator 33 and compressed in compressor 30. The compressed stream is further depleted in water by means of the heat exchanger 28 and gas-liquid separator 35. Condensed water and amine obtained from gas-liquid separator 33 is again routed back to the partial regeneration column 13. Condensed water from gas-liquid separator 35 may also be routed to the partial regeneration column 13 or processed otherwise (not shown). The water depleted first carbon dioxide containing regeneration stream fed via conduit 69 is combined with the water depleted second carbon dioxide containing regeneration stream fed via conduit 70. The combined stream is further compressed by means of compressor 31.

Said compressed stream is then subjected to further cooling, gas-liquid separation and compression steps. That is, the assembly comprising heat exchanger 29, gas-liquid separator 36, compressor 32 and conduits 72, 73 and 74 is arranged in fluid connection in series three times, so that the compressed stream fed via conduit 71 is cooled, separated from liquid and compressed three times, respectively.

The resulting combined stream fed via conduit 75 essentially consists of carbon dioxide and has a pressure of at least 30 bara. A portion of said combined stream is branched off via conduit 76, thereby forming the gaseous motive fluid stream. The remaining combined water depleted carbon dioxide containing regeneration stream is removed from the process and subjected to further use.

For the purpose of the following examples, MEA (monoethanolamine) is selected as the solvent (absorbent), but any post-combustion chemically acting solvent would be suitable. The process according to the examples targets the removal of 90% of an acid gas such as carbon dioxide from a flue gas stream at the conditions described in Table 1.

Table 1: Flue gas characteristics of the examples

| Flue gas conditions | |
|---|---|
| Wet flow rate, $Nm^3/h$ | 60,391 |
| Composition, wet mol-% | |
| Carbon dioxide ($CO_2$) | 3.6 |
| Oxygen ($O_2$) | 14.6 |
| Nitrogen ($N_2$) | 78.1 |

(continued)

| Composition, wet mol-% | |
|---|---|
| Water ($H_2O$) | 3.7 |

A reference process according to the prior art and a process according to the invention were both simulated in Aspen Plus V12.1. The ejector and carbon dioxide compressor setups were simulated in ProMax v6.0.

The setup according to example 1 is in accordance with the (simplified) setup according to Figure 2.

The MEA setup comprises an absorption column where the flue gas enters at 30 °C and near-atmospheric pressure (1.11 bara), various heat exchangers for heat integration, and a hot regeneration column (also referred to as "stripper") operating at approximately 130 °C and a top pressure of 1.9 bara.

The ternary MEA-$H_2O$-$CO_2$ absorption- and desorption-system is complex, and involves many reactions, for example the following reactions (1) to (6):

$$2\ H_2O \rightleftharpoons H_3O^+ + OH^- \quad (1)$$

$$2\ H_2O + CO_2 \rightleftharpoons H_3O^+ + HCO_3^- \quad (2)$$

$$H_2O + HCO_3^- \rightleftharpoons H_3O^+ + CO_3^{2-} \quad (3)$$

$$H_2O + RNH_3^+ \rightleftharpoons H_3O^+ + RNH_2 \quad (4)$$

$$H_2O + RNHCOO^- \rightleftharpoons RNH_2 + HCO_3^- \quad (5)$$

$$2\ RNH_2 + CO_2 \rightleftharpoons RNHCOO^- + RNH_3^+ \quad (6)$$

The loading of the solvent is the ratio of carbon dioxide in the liquid phase and carbon dioxide containing ions, over the sum of the amine and amine-containing ions. In this system, it can thus defined as:

$$Loading = \frac{[CO_2]+[CO_3^{2-}]+[HCO_3^-]+[RNHCOO^-]}{[RNH_2]+[RNH_3^+]+[RNHCOO^-]}$$

In the examples, the λ (lambda) parameter is used to define the ratio of the loading of the partially regenerated scrubbing agent stream obtained at the bottom of the partial regeneration column to the loading of the carbon dioxide enriched scrubbing agent stream at the bottom of the absorption column.

The comparative examples are considered in the following as benchmarks.

According to comparative example 1, the setup comprises a conventional MEA unit with 30 wt.-% (aqueous solution) MEA as the solvent (scrubbing agent), which achieves a carbon dioxide capture rate of 90 %. No partial regenerations column is involved, so the semi-lean solvent loop therefore cannot be implemented.

According to comparative example 2, a semi-lean solvent loop comprising a partial regeneration column is included. In the partial regenerations column, the carbon dioxide enriched scrubbing agent, i.e. the rich solvent, is heated to 95 °C in the partial regeneration column. However, no pressure reducing device is used which is in fluid connection with the partial regeneration column.

Further, a setup according to the process of the invention is considered, in which the rich solvent (the carbon dioxide enriched scrubbing agent) obtained from the bottom of the absorption column is heated to 95 °C and is subsequently sent to a partial regeneration column. A high-pressure carbon dioxide stream is used as a motive fluid in an ejector to reduce the pressure in the partial regeneration column, in particular in a top region of the partial regeneration column, to facilitate the desorption of carbon dioxide from the rich solvent to obtain a semi-lean solvent

or partially regenerated scrubbing agent. The first carbon dioxide containing regenerations stream discharged from the top of the partial regeneration column mainly contains water and carbon dioxide as the main components and MEA as a minor component. Said mixture mainly containing carbon dioxide and water obtained at the top of the partial regeneration column is entrained in the ejector, where it mixes with the motive fluid to form the carbon dioxide containing ejector outlet stream. Said outlet stream is fed to a series of cooling and compression steps as depicted in Figure 2.

The partially regenerated scrubbing agent, i.e. the semi-lean solvent obtained at the partial regenerations column is subsequently split into two streams. 80 % of the flow rate is led back to the absorber at a chosen intermediary height as the first scrubbing agent stream. The remaining 20 % of the flow rate is led back to the top of the absorber after further regeneration in the hot regeneration column as the second scrubbing agent stream. In the hot regeneration column, the partially regenerated or semi-lean solvent is further regenerated by means of steam reboiler, which produces stripping steam in the hot regeneration column to obtain the fully regenerated or lean solvent.

In the following Table 2, various examples according to the process of the invention (examples 1A to 1E) are considered, in which the flow rate of the motive fluid in the ejector is increased progressively to reduce the pressure in the top region of the partial regeneration column. In all cases 1A to 1E, the carbon dioxide rich motive fluid stream was taken from the $4^{th}$ stage of a carbon dioxide compressor system, at a pressure of 33 bara (cf. Figure 2). The flow rate of the motive fluid stream was then calculated such that the pressure of the carbon dioxide containing ejector outlet stream would reach a pressure of 1.1 bara.

Table 2: Composition of entrained stream and ejector parameters

| | Example 1A | Example 1B | Example 1C | Example 1D | Example 1E |
|---|---|---|---|---|---|
| Pressure at top of partial regeneration column [bara] | 0.950 | 0.850 | 0.825 | 0.800 | 0.750 |
| Composition (first carbon dioxide regeneration stream) at top of partial regeneration column [% mol fraction] | | | | | |
| Carbon dioxide | 22.60 | 15.73 | 10.99 | 10.47 | 8.20 |
| Water | 77.33 | 84.19 | 88.92 | 89.42 | 91.68 |
| MEA | 0.08 | 0.08 | 0.10 | 0.10 | 0.12 |
| Ejector parameters | | | | | |
| Entrainment ratio | 5.82 | 4.71 | 4.35 | 3.56 | 2.59 |
| Compression ratio | 1.29 | 1.44 | 1.48 | 1.53 | 1.63 |

The compression ratio is defined as the ratio of the outlet pressure to the suction pressure of the ejector, with a correction factor of 0.9 which accounts for irreversibilities in the system. The entrainment ratio is a relation between the mass flow rates of suction gas and motive gas, corrected for the temperature and molecular weight differences of the two fluids, and with the same 0.9 factor. As a result, the following definitions are used:

$$Compression\ ratio = \frac{Ejector\ outlet\ pressure\ [in\ bara]}{Suction\ gas\ pressure\ [in\ bara] * 0.9}$$

$$Entrainment\ ratio = \frac{Mass\ flow\ rate\ suction\ gas}{Mass\ flow\ rate\ motive\ gas} * \left(\frac{MW_{motive\ gas}}{MW_{suction\ gas}} * \frac{T_{suction\ gas}\ [in\ K]}{T_{motive\ gas}\ [in\ K]}\right)^{\frac{1}{2}} * \frac{1}{0.9}$$

In the following Table 3, the examples according to the invention 1A to 1E involving an ejector as a pressure reducing device are compared to the comparative examples 1 and 2. Thereby, some key overall performance parameters of the amine unit are examined.

Table 3: Semi-lean loading and energy consumption vs. pressure of partial regeneration column (capture rate: 90 %)

| | Comp. example 1 | Comp. example 2 | Example 1A | Example 1B | Example 1C | Example 1D | Example 1E |
|---|---|---|---|---|---|---|---|
| Pressure at top of partial regeneration column [bara] | n/a | 1.200 | 0.950 | 0.850 | 0.825 | 0.800 | 0.750 |
| Semi-lean loading [mol-$CO_2$/mol amine] | 0.430 | 0.409 | 0.393 | 0.383 | 0.376 | 0.374 | 0.372 |
| Lambda [semi-lean loading / rich loading] | n/a | 95% | 91% | 89% | 87% | 87% | 87% |
| Specific reboiler duty (SRD) [GJ_heat/t$CO_2$] | 3.68 | 3.45 | 3.06 | 2.65 | 2.31 | 2.30 | 2.26 |
| Specific compression energy for motive $CO_2$ [GJ_elec/t$CO_2$] | n/a | n/a | 0.15 | 0.24 | 0.32 | 0.46 | 0.67 |
| Specific total energy Es [(GJ_heat+GJ_elec)/t$CO_2$] | 3.68 | 3.45 | 3.21 | 2.89 | 2.63 | 2.75 | 2.94 |
| Specific total energy Es' - heat converted to elec [GJ_elec/t$CO_2$] | 1.53 | 1.44 | 1.42 | 1.34 | 1.28 | 1.41 | 1.62 |

The relation between desorbed carbon dioxide (or semi-lean loading) and the pressure and temperature profiles of the partial regeneration column is highly non-linear in view of the complexity of the ternary system as defined by reactions (1) to (7). According to Table 3, an inflection point of the semi-lean loading is observed at a pressure at the top of the partial regenerations column of approximately 0.84 bara.

As described above, a $\lambda$ value of 0.9 or less is preferred for a reasonably efficient implementation of the semi-lean solvent loop. Above a value of 0.9, high flow rates of the semi lean solvent (i.e. of the first scrubbing agent stream) to the absorption column (or within the semi-lean solvent loop) detracts from the overall energy efficiency of the scheme.

Comparative example 1 entails a high Specific Reboiler Duty (SRD). The implementation of a semi-lean solvent loop according to comparative example 2 yields improvement. However, as the loading of the semi-lean solvent is still high at 95 %, also high flow rates of the scrubbing agent in the semi-lean solvent loop are still required.

By adding an ejector as a pressure reducing device according to examples 1A to 1E, and by increasing the flow rate of the motive fluid from example 1A to example 1E, the pressure within the partial regeneration stage and the semi-lean loading decrease correspondingly.

At a pressure of 0.825 bara (example 1C), a semi-lean loading or partial loading of the scrubbing agent is obtained that is sufficiently low so that a very energy-efficient implementation of the semi-lean solvent loop is obtained, as the SRD is 37 % lower compared to comparative example 1.

As the pressure is decreased further, the loading of the partially regenerated scrubbing agent, i.e in the semi-lean solvent loop, remains stable. The consequence is that no further significant savings are obtained regarding the SRD. The water content in the stream obtained at the top of the partial regeneration column and the amount of motive fluid required to entrain this stream through the ejector both increase, as evidenced by the composition and entrainment ratio according to Table 2, with the consequence that the compression energy increases accordingly.

The total specific energy can be defined as the sum of the SRD of the hot regeneration column (heat), and the compression power required for the motive fluid (electrical energy). Es is thus defined according to the following equation (8):

$$E_S = \frac{Reboiler\ Duty + Compression\ power\ motive\ fluid}{CO_2\ mass\ flow\ rate}$$

In order to compare heat and electrical energy, conversion of heat duty to electrical power by using the coefficient of performance of a typical heat pump setup for a post-combustion amine wash (COP = 2.4) is considered. A second specific energy Es' is thus defined according to the following equation (9):

$$E_S' = \frac{\frac{Reboiler\ Duty}{COP_{heat\ pump}} + compression\ power\ motive\ fluid}{CO_2\ mass\ flow\ rate}$$

Whether Es or $E_s$' is considered, it is clear that an optimum appears to lie close to a pressure in the partial regeneration column where a sufficient amount of carbon dioxide has been desorbed to enable energy-efficient semi-lean loop implementation, and where any further decrease in pressure and increase in motive flow rate do not contribute to further carbon dioxide desorption in the partial regeneration step.

According to example 2, the combination of utilizing an ejector as pressure reducing device to overcome the liquid-gas mass transfer resistance, and use of a catalytic material with acidic centers (acidic sites) to enhance the kinetics of carbon dioxide desorption, is considered. Examples for suitable Lewis acid based catalytic materials are $TiO(OH)_2$ and $ZrO_xH_y$.

Example 2 reports the performance of a process configuration using a catalytic bed made of an acidic solid material in the partial regeneration column together with the ejector setup according to example 1. The partial regenerations column including the acidic material was modelled and simulated in Aspen Plus. In all of the example cases 2A to 2E, the same amount of catalyst was used.

According to this configuration, the carbon dioxide enriched scrubbing agent (rich solvent) is routed to a partial regeneration column containing an acidic catalyst, after heating to 90 °C. The semi-lean solvent (partially regenerated scrubbing agent) stream exiting the partial regeneration column has a reduced carbon dioxide loading. 80 % of the flow of the semi-lean solvent, which forms the first scrubbing agent stream, is routed to the absorber at an intermediate height, to form the semi-lean solvent loop together with the partial regeneration column. The remaining 20 % of the flow of the semi-lean solvent is routed to the hot regeneration column for further regeneration using a steam reboiler. The lean solvent (regenerated scrubbing agent) stream discharged from the hot regeneration column forms the second scrubbing agent stream and is fed to the top of the absorption column in order to reach the required carbon dioxide capture rate. The solvent type, the feed, the operating conditions and the target capture rate of example 2 are the same as for example 1.

Table 4: Combination ejector and catalyst

| | Comp. example 3 (no ejector) | Example 2A | Example 2B | Example 2C | Example 2D | Example 2E |
|---|---|---|---|---|---|---|
| Pressure at top of partial regeneration stage [bara] | 1.9 | 1.5 | 1.1 | 0.9 | 0.8 | 0.6 |
| Semi-lean loading [mol $CO_2$/mol amine] | 0.366 | 0.355 | 0.340 | 0.336 | 0.333 | 0.327 |
| SRD [GJ/t$CO_2$] | 1.76 | 1.64 | 1.53 | 1.48 | 1.46 | 1.45 |

The reference case (comparative example 3) using only acidic material already yields a low specific reboiler duty of 1.75 GJ/t $CO_2$. Reducing the pressure in the partial regeneration stage to lower pressures allows for lower values of the semi-lean loading and a corresponding gain on the SRD, or alternatively a lower amount of catalyst for a given SRD.

According to the following example 3, the partial regeneration stage involves a non-polar stripping agent such as hexane, together with the inclusion of an ejector setup as in Example 1.

Again, 80 % of the flow of the semi-lean solvent is routed to the absorber at an intermediate height, to form the semi-lean solvent loop together with the partial regeneration column, and the remaining 20 % of the flow of the semi-lean solvent is routed to the hot regeneration column for further regeneration using a steam reboiler. The solvent type, the feed, the operating conditions and the target capture rate of example 3 are the same as for example 1.

In the following Table 5, the impact of the Hexane flow rate in the partial regeneration column and the reduced pressure due to the use of an ejector on the semi-lean loading (in mol $CO_2$/ mol amine) and the specific reboiler duty (in GJ/t $CO_2$) is shown. The first parameter is abbreviated with "SLL", and the second one as before with "SRD".

Table 5: Ejector and hexane stripping impact on semi-lean loading and specific reboiler duty

| | Pressure at the top of the partial regeneration column [bara] | Hexane flow: 5 kmol/h | Hexane flow: 10 kmol/h | Hexane flow: 20 kmol/h | Hexane flow: 150 kmol/h |
|---|---|---|---|---|---|
| Comp. example 4 | 1.20 | SLL: 0.390<br>SRD: 2.83 | SLL: 0.385<br>SRD: 2.66 | SLL: 0.375<br>SRD: 2.50 | SLL: 0.348<br>SRD: 1.76 |

(continued)

| | Pressure at the top of the partial regeneration column [bara] | Hexane flow: 5 kmol/h | Hexane flow: 10 kmol/h | Hexane flow: 20 kmol/h | Hexane flow: 150 kmol/h |
|---|---|---|---|---|---|
| Example 3A | 100 | SLL: 0.384 SRD: 2.70 | SLL: 0.378 SRD: 2.57 | SLL: 0.371 SRD: 2.47 | n/a |
| Example 3B | 0.90 | SLL: 0.381 SRD: 2.66 | SLL: 0.375 SRD: 2.56 | SLL: 0.369 SRD: 2.46 | n/a |
| Example 3C | 0.85 | SLL: 0.376 SRD: 2.56 | SLL: 0.371 SRD: 2.47 | SLL: 0.365 SRD: 2.39 | n/a |
| Example 3D | 0.80 | SLL: 0.303 SRD: 1.34 | SLL: 0.290 SRD: 1.23 | SLL: 0.267 SRD: 1.09 | n/a |

Here again, the benefits of adding the ejector setup are notable, particularly in the range of 0.85 to 0.80 bara at the top of the partial regeneration column, where the semi-lean loading drops rapidly in the vicinity of the inflection point between loading of the solvent and partial pressure of carbon dioxide.

In contrast to a setup with hexane stripping alone, which requires a high Hexane flow rate of 150 kmol/h to achieve a SRD of 1.76 GJ/t $CO_2$, the inclusion of an ejector yields an even lower SRD of 1.34 GJ/t $CO_2$ with a mere 5 kmol/h Hexane.

List of reference signs

| | |
|---|---|
| 10 | absorption column |
| 11 | first absorption zone |
| 12 | second absorption zone |
| 13 | partial regeneration column |
| 14 | hot regeneration column |
| 15 | Ejector |
| 16 | Inlet gas port |
| 17 | Outlet gas port |
| 18 | Motive fluid port |
| 19 | Discharge port (of partial regeneration column) |
| 20 - 29 | heat exchanger |
| 30, 31, 32 | compressor |
| 33 - 36 | Gas-liquid separator |
| 40 - 76 | conduit |

**Claims**

**1.** A process for separating carbon dioxide from a flue gas stream by gas scrubbing with a liquid scrubbing agent containing at least one absorbent compound which is selective for carbon dioxide absorption, wherein the process comprises the following process steps:

(a) Providing the flue gas stream and introducing the flue gas stream into an absorption column (10);
(b) Contacting the flue gas stream in the absorption column (10) with a first scrubbing agent stream and a second scrubbing agent stream in countercurrent flow, whereby a carbon dioxide enriched scrubbing agent stream is formed, and wherein a carbon dioxide depleted flue gas stream is formed, which is discharged from the absorption column (10);
(c) Introducing the carbon dioxide enriched scrubbing agent stream into a partial regeneration column (13) to generate a partially regenerated scrubbing agent stream and a first carbon dioxide containing regeneration stream, wherein the partial regeneration column (13) comprises a discharge port (19) for discharging the first carbon dioxide containing regeneration stream from the partial regeneration column (13), and wherein said discharge port (19) is in fluid connection with a pressure reducing device (15) to reduce the pressure within the partial regeneration column (13);

(d) Dividing the partially regenerated scrubbing agent stream into a first substream and into a second substream, wherein the first substream forms the first scrubbing agent stream;
(e) Introducing the first scrubbing agent stream into the absorption column (10) for contacting the flue gas stream according to step (b);
(f) Introducing the second substream into a hot regeneration column (14), wherein the second substream is further regenerated to generate a regenerated scrubbing agent stream, which forms the second scrubbing agent stream, and to generate a second carbon dioxide containing regeneration stream;
(g) Introducing the second scrubbing agent stream into the absorption column (10) for contacting the flue gas stream according to step (b).

**2.** The process according to claim 1, wherein the pressure reducing device is a vacuum pump, and wherein a suction port of the vacuum pump is in fluid connection with the discharge port (19) of the partial regeneration column (13).

**3.** The process according to claim 1, wherein the pressure reducing device is an ejector (15), in particular a vacuum ejector, comprising a motive fluid port (18), an inlet gas port (16) and an outlet gas port (17), wherein the inlet gas port (16) is in fluid connection with the discharge port (19) of the partial regeneration column (13), the motive fluid port (18) is in fluid connection with a motive fluid source which provides a gaseous motive fluid stream at elevated pressure, and wherein a mixture of the first carbon dioxide containing regeneration stream and of the gaseous motive fluid stream is discharged from the ejector (15) via its outlet gas port (17), thereby forming a carbon dioxide containing ejector outlet stream.

**4.** The process according to claim 3, wherein the motive fluid stream is a compressed carbon dioxide containing stream, which is at least partially formed of the first carbon dioxide containing regeneration stream, the second carbon dioxide containing regeneration stream, or a combination of the two aforementioned streams.

**5.** The process according to claim 3 or 4, wherein the motive fluid port (18) of the ejector (15) is in fluid connection with an outlet port of a compressor, and wherein in the compressor, either at least a portion of the carbon dioxide containing ejector outlet stream, at least a portion of the second carbon dioxide containing regeneration stream, or a combination of the aforementioned streams is compressed and provided as the gaseous motive fluid stream at elevated pressure.

**6.** The process according to one of claims 3 to 5, wherein the gaseous motive fluid stream has a pressure of more than 5 bara, or more than 10 bara, or more than 20 bara, or more than 30 bara, or from 10 to 55 bara, preferably from 20 to 45 bara, more preferred form 30 to 35 bara.

**7.** The process according to one of claims 3 to 6, wherein a compression ratio applied for the ejector (15), defined as the ratio of the outlet pressure at the outlet gas port of the ejector to the suction pressure at the inlet gas port of the ejector is from 1.1 to 10.0, preferably is from 1.2 to 5.0.

**8.** The process according to one of claims 3 to 7, wherein an entrainment ratio applied for the ejector (15), defined as the ratio of the mass flow of the first carbon dioxide containing regeneration stream introduced into the ejector via its inlet gas port (16) to the mass flow of the gaseous motive fluid stream introduced into the ejector via its motive fluid port (18) is from 1 to 20, preferably is from 2 to 10.

**9.** The process according to one of the preceding claims, wherein the pressure within the partial regeneration column (13) is below atmospheric pressure, preferably the pressure within the partial regeneration column (13) is from 0.75 bara to 0.95 bara, more preferred is from 0.80 bara to 0.85 bara, more preferred is from 0.82 to 0.83 bara.

**10.** The process according to one of the preceding claims, wherein in the partial regeneration column (13), the partially regenerated scrubbing agent stream and the first carbon dioxide containing regeneration stream are generated at a temperature equal to or below 100 °C.

**11.** The process according to one of the preceding claims, wherein the partially regenerated scrubbing agent stream is generated in such a way that the ratio of the carbon dioxide loading of the partially regenerated scrubbing agent stream to the carbon dioxide loading of the carbon dioxide enriched scrubbing agent stream is 0.9 or less, preferably is from 0.6 to 0.9.

**12.** The process according to one of the preceding claims, wherein in the partial regeneration column (13), the carbon dioxide enriched scrubbing agent stream is contacted by means of a gaseous nonpolar stripping agent in countercurrent flow, to enhance regeneration of the carbon dioxide enriched scrubbing agent stream to the partially regenerated scrubbing agent stream.

**13.** The process according to claim 12, wherein the electric dipole moment of the nonpolar stripping agent is 0.50 Debye or less, preferably is 0.25 Debye or less, more preferred is 0.10 Debye or less.

**14.** The process according to claim 12 or 13, wherein the nonpolar stripping agent comprises at least one component from the group comprising Pentane, Hexane, Cyclopentane, and Cyclohexane.

**15.** The process according to one of the preceding claims, wherein in the partial regeneration column (13) the carbon dioxide enriched scrubbing agent stream is additionally contacted with a solid acidic regeneration catalyst having Lewis or Bronsted acidic centers, to enhance regeneration of the carbon dioxide enriched scrubbing agent stream to the partially regenerated scrubbing agent stream.

**16.** The process according to one of the preceding claims, wherein the scrubbing agent comprises an aqueous solution of at least one amine, wherein the at least one amine is the absorbent compound.

**17.** The process according to one of the preceding claims, wherein the absorption column (10) comprises a first absorption zone (11) and a second absorption zone (12), wherein the flue gas stream is first introduced into the first absorption zone (11), and is contacted in the first absorption zone (11) with the first scrubbing agent stream and the second scrubbing agent stream introduced into the second absorption zone, and wherein the flue gas stream subsequently is introduced into the second absorption zone (12), and is contacted in the second absorption zone (12) with the second scrubbing agent stream.

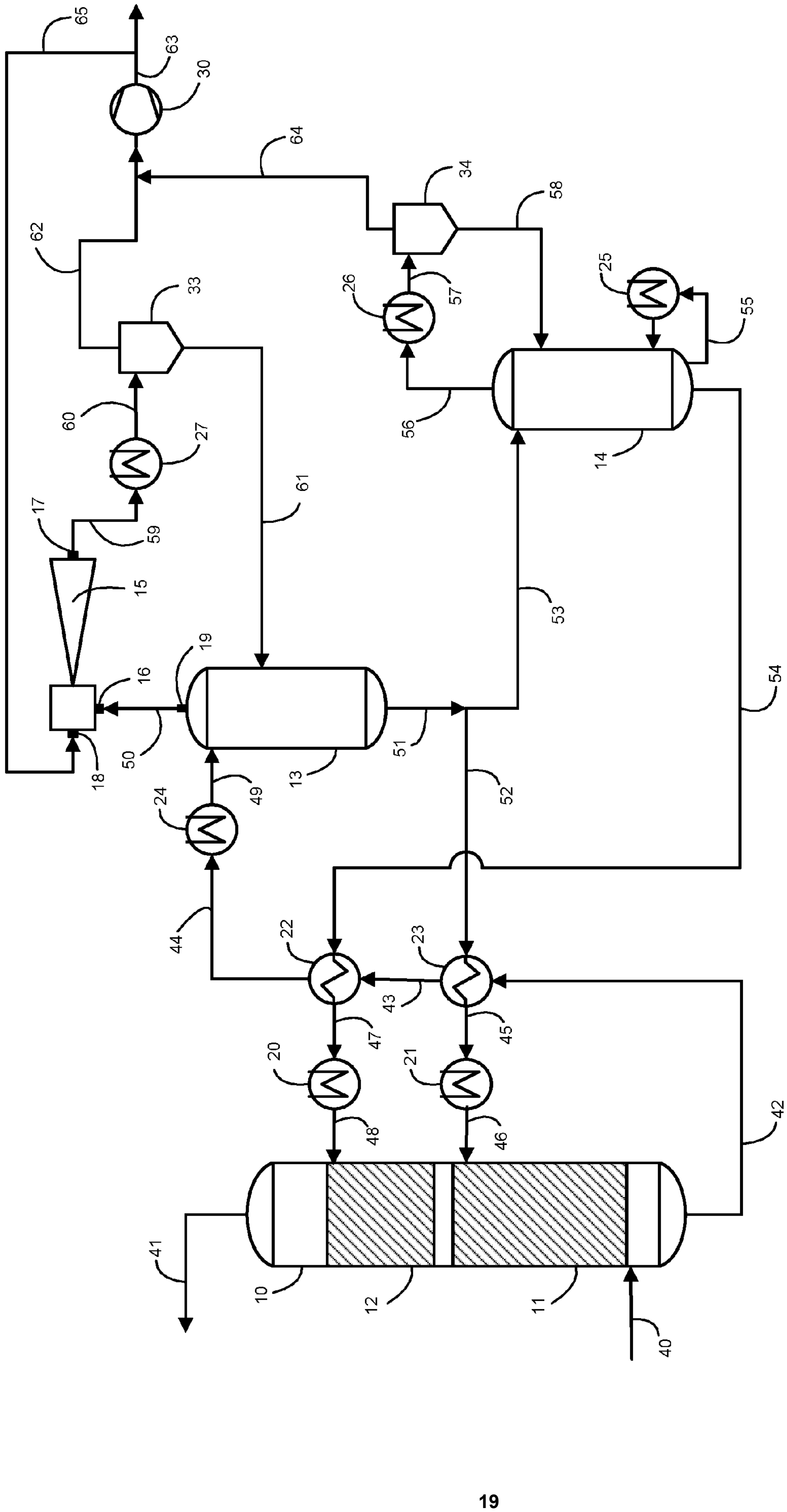
10
11
12
13
14
15
16
17
18
19
20
21
22
23
24
25
26
27
30
33
34
40
41
42
43
44
45
46
47
48
49
50
51
52
53
54
55
56
57
58
59
60
61
62
63
64
65

Fig. 1

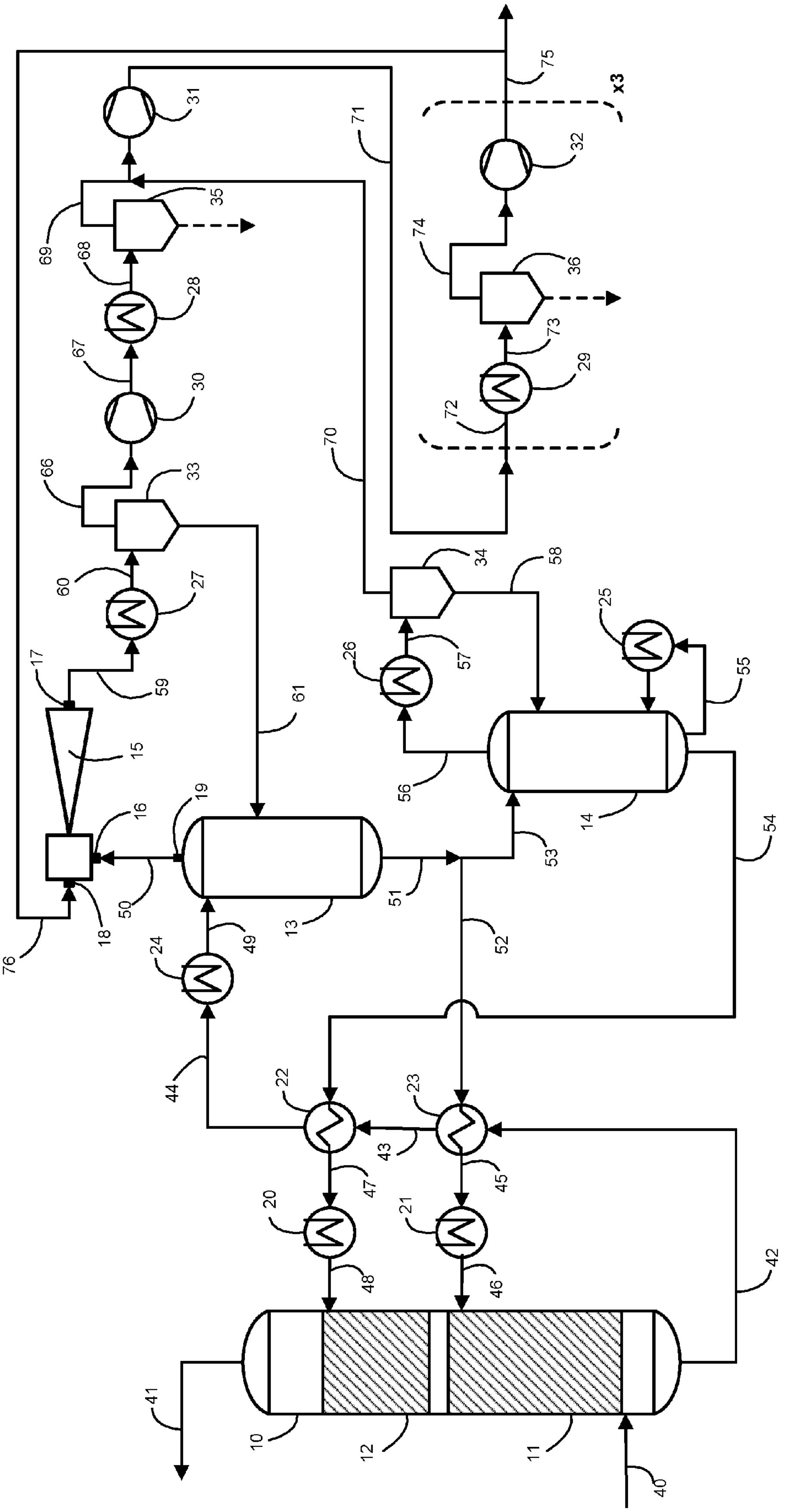
10
11
12
13
14
15
16
17
18
19
20
21
22
23
24
25
26
27
28
29
30
31
32
33
34
35
36
40
41
42
43
44
45
46
47
48
49
50
51
52
53
54
55
56
57
58
59
60
61
66
67
68
69
70
71
72
73
74
75
76
x3

Fig. 2

Europäisches Patentamt
European Patent Office
Office européen des brevets

# EUROPEAN SEARCH REPORT

Application Number
EP 24 18 7355

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 282 511 A1 (AIR LIQUIDE [FR]) 29 November 2023 (2023-11-29) * paragraphs [0050] - [0052]; claims 1-15; figure 1 * | 1-17 | INV. B01D53/14 |
| X | GB 1 484 050 A (HECKE F VAN) 24 August 1977 (1977-08-24) * page 3, line 125 - page 9, line 15; claims 1-12; figures 1-4 * | 1-17 | |
| A | EP 2 581 129 A1 (TNO [NL]) 17 April 2013 (2013-04-17) * paragraphs [0009] - [0014], [0024], [0039] - [0043]; claims 1-14; figure 1 * | 1,10-17 | |
| A | US 2013/125747 A1 (DUBE SANJAY KUMAR [US] ET AL) 23 May 2013 (2013-05-23) * paragraphs [0029] - [0033]; figures 1-5 * | 1-9 | |
| A | US 2008/127831 A1 (ROCHELLE GARY T [US] ET AL) 5 June 2008 (2008-06-05) * paragraphs [0050] - [0073]; figures 1-6 * | 1-9 | TECHNICAL FIELDS SEARCHED (IPC): B01D |
| A | AU 2011 274 400 A1 (CARBON CAPTURE SCIENTIFIC LLC [US]) 31 January 2013 (2013-01-31) * paragraphs [0007] - [0008], [0078]; figures 1, 4-6, 9-11 * | 1-17 | |

The present search report has been drawn up for all claims

1

| Place of search | Date of completion of the search | Examiner |
|---|---|---|
| Munich | 20 December 2024 | Ruiz Martinez, Maria |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 24 18 7355

This annex lists the patent family members relating to the patent documents cited in the above-mentioned European search report. The members are as contained in the European Patent Office EDP file on
The European Patent Office is in no way liable for these particulars which are merely given for the purpose of information.

20-12-2024

| Patent document cited in search report | | Publication date | Patent family member(s) | | Publication date |
|---|---|---|---|---|---|
| EP 4282511 | A1 | 29-11-2023 | EP 4282511 | A1 | 29-11-2023 |
| | | | WO 2024208538 | A1 | 10-10-2024 |
| GB 1484050 | A | 24-08-1977 | AT 369421 | B | 27-12-1982 |
| | | | AU 503541 | B2 | 06-09-1979 |
| | | | BE 836929 | A | 22-06-1976 |
| | | | BR 7508536 | A | 24-08-1976 |
| | | | CA 1068638 | A | 25-12-1979 |
| | | | DE 2557531 | A1 | 08-07-1976 |
| | | | DK 588975 | A | 25-06-1976 |
| | | | ES 443792 | A1 | 16-04-1977 |
| | | | FR 2295781 | A1 | 23-07-1976 |
| | | | GB 1484050 | A | 24-08-1977 |
| | | | IE 41981 | B1 | 07-05-1980 |
| | | | IN 144785 | B | 08-07-1978 |
| | | | IT 1051858 | B | 20-05-1981 |
| | | | NZ 179638 | A | 18-12-1978 |
| | | | PH 12514 | A | 20-04-1979 |
| | | | ZA 757939 | B | 24-11-1976 |
| EP 2581129 | A1 | 17-04-2013 | NONE | | |
| US 2013125747 | A1 | 23-05-2013 | TW 201330917 | A | 01-08-2013 |
| | | | US 2013125747 | A1 | 23-05-2013 |
| | | | US 2013213224 | A1 | 22-08-2013 |
| | | | WO 2013072821 | A1 | 23-05-2013 |
| US 2008127831 | A1 | 05-06-2008 | NONE | | |
| AU 2011274400 | A1 | 31-01-2013 | AU 2011274400 | A1 | 31-01-2013 |
| | | | BR 112013000492 | A2 | 31-05-2016 |
| | | | CA 2804627 | A1 | 12-01-2012 |
| | | | CN 102985161 | A | 20-03-2013 |
| | | | EA 201390028 | A1 | 28-06-2013 |
| | | | EP 2590728 | A2 | 15-05-2013 |
| | | | JP 2013535316 | A | 12-09-2013 |
| | | | US 2012009114 | A1 | 12-01-2012 |
| | | | WO 2012006610 | A2 | 12-01-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 4282511 A1
- EP 24165203 A